# FASCICULE DE BREVET EUROPEEN

(11) **EP 3 802 637 B1**
(45) Date de publication et mention de la délivrance du brevet: **30.11.2022**
(21) Numéro de dépôt: 18740886.9
(22) Date de dépôt: 04.06.2018
(51) Int. Cl.: C08F 120/06, C09C 3/04, C08F 220/06, C09C 3/10, C09C 1/02

(54) **COPOLYMÈRE ET BROYAGE D'UNE MATIÈRE MINÉRALE**
COPOLYMER UND MAHLEN EINES MINERALISCHEN MATERIALS
COPOLYMER AND GRINDING OF A MINERAL MATTER

(43) Date de publication de la demande: 14.04.2021
(73) Titulaire: Coatex, 69730 Genay (FR)
(72) Inventeur: CHAMPAGNE, Clémentine, 69300 Caluire-et-Cuire (FR); JACQUEMET, Christian, 69005 Lyon (FR); PARRENIN, Laurie, 01480 Villeneuve (FR); SUAU, Jean-Marc, 69480 Lucenay (FR)
(74) Mandataire: Balmefrezol, Ludovic Francis Pierre
(86) Numéro de dépôt international: PCT/FR2018/051283
(87) Numéro de publication internationale: WO 2019/234310

(56) Documents cités:
- EP-A1- 2 657 261
- FR-A1- 3 056 594
- US-A1- 2015 148 500

## Description

L'invention concerne un polymère de masse moléculaire inférieure à 8 000 g/mol et d'indice de polymolécularité IP inférieur à 3. Il est obtenu par polymérisation radicalaire dans l'eau et à une température supérieure à 50°C, d'au moins un monomère anionique comprenant au moins une insaturation oléfinique polymérisable et au moins une fonction acide carboxylique, en présence de phosphore au degré d'oxydation I, de phosphore au degré d'oxydation III et d'un composé générateur de radicaux.

L'invention concerne également la préparation de ce polymère ainsi que son utilisation pour le broyage de matière minérale ou encore comme agent détergent ou comme agent anti-tartre.

De manière particulièrement avantageuse selon l'invention, la participation simultanée du composé comprenant du phosphore au degré d'oxydation I et du composé comprenant du phosphore au degré d'oxydation III à la polymérisation radicalaire selon l'invention permet d'obtenir un polymère selon l'invention possédant des performances améliorées par rapport aux polymères de l'état de la technique. En particulier, la participation du composé comprenant du phosphore au degré d'oxydation III en une quantité déterminée par rapport au composé comprenant du phosphore au degré d'oxydation I permet d'obtenir un polymère selon l'invention possédant des performances encore améliorées par rapport aux polymères de l'état de la technique.

On connait des agents d'aide au broyage, notamment des polymères issus de monomères insaturés comprenant une ou plusieurs fonctions acides carboxyliques. Ces agents d'aide au broyage permettent généralement de contrôler la rhéologie de la suspension de particules de matière minérale lors de l'opération de broyage. Notamment, ces agents d'aide au broyage permettent de réduire autant que possible la limite d'écoulement de la suspension de charge minérale à broyer tout en maintenant un niveau de viscosité suffisante durant l'opération de broyage.

De manière générale, les agents d'aide au broyage de matière minérale doivent être efficaces et permettre de contrôler la granulométrie des particules obtenues, en particulier pour des matières minérales utilisées ensuite dans des sauces de couchage pour l'industrie papetière.

De plus, les agents d'aide au broyage de matière minérale doivent avoir une efficacité élevée en termes de durée de broyage pour une granulométrie particulière pour une quantité définie de matière minérale. En effet, pour la préparation d'une quantité définie de particules minérales de granulométrie particulière, un temps d'utilisation réduit des installations de broyage permet une amélioration du rendement global de la méthode de broyage.

De même, il est important de disposer d'agents d'aide au broyage de matière minérale qui permettent de préparer des suspensions aqueuses de particules de matière minérale de faible viscosité qui soient stables peu après le broyage mais également plusieurs heures ou plusieurs jours après le broyage. Les phénomènes de dérive de la viscosité doivent être contrôlés car ils peuvent conduire à une gélification des suspensions préparées qui en rendrait la manipulation difficile voire impossible. De tels écarts de viscosité doivent être les plus faibles possibles. De même, les phénomènes de sédimentation des particules doivent être évités ou fortement ralentis.

Outre le contrôle de la stabilité, le contrôle de la viscosité des suspensions aqueuses de particules de matière minérale broyée est également essentiel. De manière générale, le contrôle de la viscosité des suspensions aqueuses de particules de matière minérale broyée doit permettre d'atteindre une viscosité faible tout en permettant une concentration élevée en matière minérale de la suspension aqueuse de matière minérale.

Il est donc également important de pouvoir préparer des suspensions aqueuses de particules de matière minérale possédant un extrait sec élevé au moyen d'agents d'aide au broyage performants. Des agents d'aide au broyage de matière minérale permettant d'obtenir un extrait sec élevé de ces suspensions aqueuses de particules de matière minérale permet également d'augmenter la productivité des procédés de préparation de ces suspensions.

De plus, d'un point de vue environnemental, il est important de pouvoir disposer d'agents d'aide au broyage permettant de préparer des suspensions de particules de matière minérale comprenant une quantité d'eau réduite tout en maintenant ou en améliorant les propriétés de ces suspensions.

Par ailleurs, lors de la fabrication des papiers couchés et surfacés, des compositions aqueuses de sauces de couchage papetières sont utilisées pour déposer une couche de particules de matière minérale et de liant à la surface de la feuille de papier. On modifie ainsi son état de surface pour améliorer son imprimabilité, sa brillance ou encore son opacité. Par exemple, pour un papier couché destiné à l'impression, la couche est obtenue à partir d'une dispersion aqueuse constituée majoritairement de liants et de pigments encore appelés charges minérales. Les pigments les plus utilisés pour le couchage du papier sont le kaolin, le carbonate de calcium, le dioxyde de titane, le talc et les pigments organiques, notamment les pigments plastiques. Au sein de ces compositions, la charge minérale est sous la forme de particules. L'utilisation de telles sauces de couchage papetières permet notamment d'améliorer les propriétés physiques du papier, en particulier d'améliorer ses propriétés optiques.

L'amélioration de l'efficacité des procédés de fabrication de papier est également permise grâce à l'utilisation de ces sauces de couchage papetières.

Améliorer la compatibilité des différents composés utilisés lors de la préparation du papier doit également être recherché.

Ainsi, bien qu'il existe des agents d'aide au broyage pour procédés de broyage humide de matière minérale, les procédés de l'état de la technique ne permettent pas toujours d'apporter de solution satisfaisante aux problèmes rencontrés. Il existe donc un besoin de disposer d'agents d'aide au broyage ou de procédés améliorés de broyage de matière minérale dans l'eau.

Par ailleurs, il existe également un besoin de disposer d'agents de lavage permettant d'améliorer l'efficacité de méthodes de lavage, en particulier lorsqu'ils sont combinés à au moins un composé tensio-actif.

Il existe également un besoin de disposer de compositions détergentes ou anti-tartre comprenant au moins un polymère dont l'efficacité est améliorée, en particulier en combinaison avec au moins un composé tensio-actif. EP2657261A1, US 2015/148500 A1 et FR3056594A1 décrivent la synthèse de polymères de l'acide acrylique de faibles poids moléculaires obtenus par polymérisation en présence d'hypophosphite de sodium ou de sels de cuivre I ou II.

L'invention permet d'apporter une solution à tout ou partie des problèmes des méthodes de l'état de la technique. Ainsi, l'invention fournit un polymère de masse moléculaire en poids Mw (mesurée par CES) inférieure à 8 000 g/mol et d'indice de polymolécularité IP inférieur à 3, obtenu par au moins une réaction de polymérisation radicalaire dans l'eau et à une température supérieure à 50°C, d'au moins un monomère anionique comprenant au moins une insaturation oléfinique polymérisable et au moins une fonction acide carboxylique, en présence :
(a) d'au moins un composé (a) comprenant du phosphore au degré d'oxydation I,
(b) d'au moins 5 % en poids d'au moins un composé (b) comprenant du phosphore au degré d'oxydation III, par rapport à la quantité totale en poids de composés (a) et (b),
(c) d'au moins un composé (c) générateur de radicaux choisi parmi peroxyde d'hydrogène, benzoyl peroxyde, acetyl peroxyde, lauryl peroxyde, hydroperoxyde de tertiobutyle, cumene hydroperoxyde, persulfate d'ammonium, un persulfate de métal alcalin, un composé azoïque, tels que 2,2'-azobis(2-(4,5-dihydroimidazolyl)propane, dihydrochlorure de 2,2'-azobis(2-méthylpropionamidine), diazo-valéro-nitrile, acide 4,4'-azobis-(4-cyanovalérique), AZDN ou 2,2'-azo-bis-isobutyronitrile, et leurs mélanges, éventuellement associés à un ion choisi parmi Fe^{II}, Fe^{III}, Cu^{I}, Cu^{II}.

Selon l'invention, les quantités de composés mis en œuvre, notamment les composés (a), (b) et (c), en particulier les composés (a) et (b), concernent les quantités d'espèce chimique active, notamment les espèces chimiques non-hydratées.

De manière préférée, le polymère selon l'invention est préparé par une réaction de polymérisation radicalaire réalisée dans l'eau. Il peut également être préparé dans un solvant en mélange avec de l'eau, notamment un solvant alcoolique, en particulier alcool isopropylique. Selon l'invention, la réaction de polymérisation radicalaire est réalisée en l'absence de 1,4-dioxane, de préférence en l'absence de solvant organique.

La masse du polymère selon l'invention peut varier de manière relativement large. De manière préférée, la masse moléculaire moyenne en poids Mw du polymère selon l'invention est inférieure à 7 500 g/mol, de préférence inférieure à 6 500 g/mol ou inférieure à 6 000 g/mol, plus préférentiellement inférieure à 5 500 g/mol. De manière également préférée, la masse moléculaire moyenne en poids Mw du polymère selon l'invention est supérieure à 1 000 g/mol ou supérieure à 1 200 g/mol ou encore supérieure à 1 500 g/mol.

De manière particulièrement préférée, le polymère selon l'invention a une masse moléculaire moyenne en poids Mw allant de 1 000 à 8 000, 7 500, 6 500, 6 000 ou 5 500 g/mol. De manière plus particulièrement préférée, le polymère selon l'invention a une masse moléculaire moyenne en poids Mw allant de 1 200 à 8 000, 7 500, 6 500, 6 000 ou 5 500 g/mol. De manière encore plus particulièrement préférée, le polymère selon l'invention a une masse moléculaire moyenne en poids Mw allant de 2 000 à 8 000, 7 500, 6 500, 6 000 ou 5 500 g/mol.

De manière tout particulièrement préférée, le polymère selon l'invention a une masse moléculaire moyenne en poids Mw allant de 3 500 g/mol à 5 500 ou à 6 500 g/mol. De manière également tout particulièrement préférée, le polymère selon l'invention a une masse moléculaire moyenne en poids Mw allant de 4 500 g/mol à 5 500 ou à 6 500 g/mol.

L'indice de polymolécularité IP du polymère selon l'invention peut varier de manière relativement large. De manière préférée, l'indice de polymolécularité IP du polymère selon l'invention est inférieur à 2,8. De manière plus préférée, l'indice de polymolécularité IP du polymère selon l'invention va de 1,5 à 3 ou de 1,5 à 2,8. De manière encore plus préférée, l'indice de polymolécularité IP du polymère selon l'invention va de 1,5 à 2,5.

Une étape essentielle de la préparation du polymère mis en œuvre selon l'invention est la réaction de polymérisation radicalaire d'au moins un monomère anionique comprenant au moins une insaturation oléfinique polymérisable et au moins une fonction acide carboxylique.

De manière préférée, le monomère anionique comprenant au moins une insaturation oléfinique polymérisable comprend une ou deux fonctions acides carboxyliques. De manière plus préférée, il comprend une seule fonction acide carboxylique.

De manière plus préférée, le monomère anionique est choisi parmi acide acrylique, acide méthacrylique, un sel d'acide acrylique, un sel d'acide méthacrylique et leurs mélanges. De manière particulièrement préférée selon l'invention, la réaction de polymérisation radicalaire ne met en œuvre que de l'acide acrylique.

De manière également préférée, le monomère anionique comprenant au moins une insaturation oléfinique polymérisable et au moins une fonction acide carboxylique est différent de l'acide maléique.

Outre le monomère anionique comprenant au moins une insaturation oléfinique polymérisable et au moins une fonction acide carboxylique, la réaction de polymérisation radicalaire peut mettre en œuvre au moins un autre monomère. De manière préférée, la réaction de polymérisation peut alors également mettre en œuvre au moins un monomère choisi parmi :
- un autre monomère anionique différent choisi parmi acide acrylique, acide méthacrylique, acide itaconique, acide maléique, leurs sels et leurs mélanges,
- un monomère non-ionique comprenant au moins une insaturation oléfinique polymérisable, de préférence au moins une insaturation éthylénique polymérisable et notamment une fonction vinylique polymérisable, plus préférentiellement un monomère non-ionique choisi parmi styrène, vinylcaprolactame, les esters d'un acide comprenant au moins une fonction acide monocarboxylique, en particulier un ester d'un acide choisi parmi acide acrylique, acide méthacrylique, et leurs mélanges, par exemple, acrylate d'alkyle, en particulier acrylate de Ci-Cio-alkyl, préférentiellement acrylate de C₁-C₄-alkyl, plus préférentiellement acrylate de méthyle, acrylate d'éthyle, acrylate de propyle, acrylate d'isobutyle, acrylate de n-butyle, méthacrylate d'alkyle, en particulier méthacrylate de Ci-Cio-alkyl, préférentiellement méthacrylate de C₁-C₄-alkyl, plus préférentiellement méthacrylate de méthyle, méthacrylate d'éthyle, méthacrylate de propyle, méthacrylate d'isobutyle, méthacrylate de n-butyle, acrylate d'aryle, de préférence phénylacrylate, benzylacrylate, phénoxyéthylacrylate, méthacrylate d'aryle, de préférence phénylméthacrylate, benzylméthacrylate, phénoxyéthylméthacrylate, un composé de formule (I) :

   R¹-(L¹)ₘ-(L²)ₙ-R² (I)

   dans laquelle :
   ∘ R¹ représente un groupement acrylate polymérisable ou un groupement méthacrylate polymérisable,
   ∘ R² représente un groupement OH ou un groupement OCH₃,
   ∘ L¹ et L², identiques ou différents, représentent indépendamment un groupement éthylèneoxy ou un groupement propylèneoxy et
   ∘ m et n, identiques ou différents et dont au moins un est différent de 0, représentent un nombre inférieur ou égal à 150 et leur somme m + n est inférieure à 150 et
- acide 2-acrylamido-2-méthylpropane sulfonique, un sel d'acide 2-acrylamido-2-méthylpropane sulfonique, acide 2-(méthacryloyloxy)éthanesulfonique, un sel d'acide 2-(méthacryloyloxy)éthanesulfonique, méthallyl sulfonate de sodium, styrène sulfonate de sodium et leurs mélanges.

De préférence, cet autre monomère anionique est différent de l'acide maléique.

Lors de la réaction de polymérisation, les quantités de monomère anionique comprenant au moins une insaturation oléfinique polymérisable et au moins une fonction acide carboxylique peuvent varier assez largement. De manière préférée, la réaction de polymérisation met en œuvre 100 % en poids de ce monomère anionique.

De manière analogue, les quantités d'autres monomères peuvent également varier assez largement. De manière préférée, la réaction de polymérisation peut alors mettre en œuvre de 70 à 99,5 % en poids de monomère anionique comprenant au moins une insaturation oléfinique polymérisable et une fonction acide carboxylique et de 0,5 à 30 % en poids d'au moins un monomère choisi parmi :
- un autre monomère anionique différent choisi parmi acide acrylique, acide méthacrylique, acide itaconique, acide maléique, leurs sels et leurs mélanges,
- un monomère non-ionique comprenant au moins une insaturation oléfinique polymérisable, de préférence au moins une insaturation éthylénique polymérisable et notamment une fonction vinylique polymérisable, plus préférentiellement un monomère non-ionique choisi parmi styrène, vinylcaprolactame, les esters d'un acide comprenant au moins une fonction acide monocarboxylique, en particulier un ester d'un acide choisi parmi acide acrylique, acide méthacrylique, et leurs mélanges, par exemple acrylate d'alkyle, en particulier acrylate de Ci-Cio-alkyl, préférentiellement acrylate de C₁-C₄-alkyl, plus préférentiellement acrylate de méthyle, acrylate d'éthyle, acrylate de propyle, acrylate d'isobutyle, acrylate de n-butyle, méthacrylate d'alkyle, en particulier méthacrylate de Ci-Cio-alkyl, préférentiellement méthacrylate de C₁-C₄-alkyl, plus préférentiellement méthacrylate de méthyle, méthacrylate d'éthyle, méthacrylate de propyle, méthacrylate d'isobutyle, méthacrylate de n-butyle, acrylate d'aryle, de préférence phénylacrylate, benzylacrylate, phénoxyéthylacrylate, méthacrylate d'aryle, de préférence phénylméthacrylate, benzylméthacrylate, phénoxyéthylméthacrylate, un composé de formule (I) :

   R¹-(L¹)ₘ-(L²)ₙ-R² (I)

   dans laquelle :
   ∘ R¹ représente un groupement acrylate polymérisable ou un groupement méthacrylate polymérisable,
   ∘ R² représente un groupement OH ou un groupement OCH₃,
   ∘ L¹ et L², identiques ou différents, représentent indépendamment un groupement éthylèneoxy ou un groupement propylèneoxy et
   ∘ m et n, identiques ou différents et dont au moins un est différent de 0, représentent un nombre inférieur ou égal à 150 et leur somme m + n est inférieure à 150 et
- acide 2-acrylamido-2-méthylpropane sulfonique, un sel d'acide 2-acrylamido-2-méthylpropane sulfonique, acide 2-(méthacryloyloxy)éthanesulfonique, un sel d'acide 2-(méthacryloyloxy)éthanesulfonique, méthallyl sulfonate de sodium, styrène sulfonate de sodium et leurs mélanges.

De préférence, cet autre monomère anionique est différent de l'acide maléique.

De préférence, lors de la réaction de polymérisation pour la préparation du polymère selon l'invention, le composé (a) est un composé minéral ; il ne comprend alors pas de liaison covalente phosphore-carbone. De manière plus préférée, il s'agit de l'acide hypophosphoreux (H₃PO₂) ou d'un dérivé de l'acide hypophosphoreux. De manière encore plus préférée, le composé (a) est un composé comprenant au moins un ion hypophosphite (H₂PO₂⁻). Le composé (a) selon l'invention peut donc être choisi parmi l'hypophosphite de sodium (H₂PO₂Na), hypophosphite de potassium (H₂PO₂K), hypophosphite de calcium ([H₂PO₂]₂Ca) et leurs mélanges. Selon l'invention, le composé (a) préféré est l'hypophosphite de sodium.

Lors de la réaction de polymérisation selon l'invention, le composé (a) est mis en œuvre en une quantité d'au plus 95 % en poids ou d'au plus 94 % en poids d'au plus 92,5 % en poids par rapport à la quantité totale en poids de composés (a) et (b). De préférence, la quantité en poids du composé (a) mis en œuvre va de 1 à 95 % en poids, plus préférentiellement de 50 à 95 % en poids ou de 70 à 95 % ou encore de 80 à 95 % en poids, par rapport à la quantité totale en poids de composés (a) et (b). Également de préférence, la quantité en poids du composé (a) mis en œuvre va de 1 à 95 % en poids, plus préférentiellement de 1 à 94 % en poids ou de 1 à 92,5 % ou encore de 1 à 90 % en poids, par rapport à la quantité totale en poids de composés (a) et (b). Également de préférence, la quantité en poids du composé (a) mis en œuvre va de 50 à 95 % en poids, plus préférentiellement de 50 à 94 % en poids ou de 50 à 92,5 % ou encore de 50 à 90 % en poids, par rapport à la quantité totale en poids de composés (a) et (b). La réaction de polymérisation peut également être conduite en l'absence de composé (a).

De manière préférée, lors de la réaction de polymérisation selon l'invention, le composé (a) est mis en œuvre en une quantité allant de 0,01 à 10 % en poids par rapport à la quantité de monomères mis en œuvre, en particulier par rapport à la quantité de monomère anionique comprenant au moins une insaturation oléfinique polymérisable et au moins une fonction acide carboxylique. De manière plus préférée selon l'invention, cette quantité de composé (a) mis en œuvre va de 0,01 à 5 ou 6 % en poids ou de 0,01 à 2 ou 3 % en poids par rapport à la quantité de monomères mis en œuvre.

Outre le composé (a) comprenant du phosphore au degré d'oxydation I, la réaction de préparation du polymère selon l'invention met également en œuvre au moins 5 % en poids d'au moins un composé (b) comprenant du phosphore au degré d'oxydation III, par rapport à la quantité totale en poids de composés (a) et (b).

De préférence lors de la réaction de polymérisation pour la préparation du polymère selon l'invention, le composé (b) est un composé minéral ; il ne comprend alors pas de liaison covalente phosphore-carbone. De manière plus préférée, il s'agit de l'acide phosphoreux (H₃PO₃) ou d'un dérivé de l'acide phosphoreux, en particulier d'un dérivé de l'acide phosphoreux. De manière encore plus préférée, le composé (b) est un composé comprenant au moins un ion phosphite (HPO₃²⁻). Le composé (b) selon l'invention peut donc être choisi parmi phosphite de sodium (HPO₃Na₂), phosphite de potassium (HPO₃K₂), phosphite de calcium (HPO₃Ca) et leurs mélanges, en particulier de phosphite de sodium (HPO₃Na₂) et de phosphite de calcium (HPO₃Ca). Selon l'invention, le composé (b) préféré est choisi parmi phosphite de sodium (HPO₃Na₂), phosphite de calcium (HPO₃Ca) et leurs mélanges. Selon l'invention, le composé (b) plus préféré est le phosphite de calcium (HPO₃Ca).

Lors de la réaction de polymérisation selon l'invention, le composé (b) est mis en œuvre en une quantité d'au moins 5 % en poids, par rapport à la quantité totale en poids de composés (a) et (b). De préférence, la quantité en poids du composé (b) mis en œuvre est supérieure à 6 % en poids ou supérieure à 7,5 % en poids par rapport à la quantité totale en poids des composés (a) et (b). Egalement de préférence, le composé (b) est mis en œuvre en une quantité supérieure à 10 % en poids, supérieure à 12,5 % en poids ou supérieure à 15 % en poids, aussi préférentiellement supérieure à 20 % en poids, supérieure à 25 % en poids, supérieure à 30 % en poids ou supérieure à 40 % en poids, par rapport à la quantité totale en poids de composés (a) et (b).

Également de préférence, la quantité en poids du composé (b) mis en œuvre va de 5 à 95 % en poids, plus préférentiellement de 5 à 50 % en poids ou de 5 à 30 % en poids ou encore de 5 à 20 % en poids, par rapport à la quantité totale en poids de composés (a) et (b).

Outre les composés (a) et (b) comprenant respectivement du phosphore au degré d'oxydation I et du phosphore au degré d'oxydation III, la réaction de préparation du polymère selon l'invention met également en œuvre au moins un composé (c) générateur de radicaux. De manière préférée, le composé (c) est choisi parmi peroxyde d'hydrogène, persulfate d'ammonium, persulfate de sodium, persulfate de potassium et leurs mélanges.

Lors de la réaction de polymérisation selon l'invention, le composé (c) est mis en œuvre en une quantité allant de 0,1 à 5 % en poids par rapport à la quantité en poids de monomère anionique ou de monomères. De manière préférée, la quantité de peroxyde d'hydrogène mise en œuvre va de 0,5 à 4,5 % en poids par rapport à la quantité en poids de monomère anionique ou de monomères. De manière également préférée, la quantité de persulfate d'ammonium ou de persulfate de métal alcalin, en particulier de persulfate de sodium ou de persulfate de potassium, mise en œuvre va de de 0,1 à 4 % en poids par rapport à la quantité en poids de monomère anionique ou de monomères.

Lors de la mise en œuvre du peroxyde d'hydrogène ou d'un persulfate associé à un ion choisi parmi Fe^{II}, Fe^{III}, Cu^{I}, Cu^{II}, ces ions peuvent être introduits au moyen de différents composés chimiques. Comme exemples de composés chimiques permettant d'introduire des ions Fe^{II}, Fe^{III}, Cu^{I}, Cu^{II}, on peut citer sulfate de fer, sulfate de fer hydraté, sulfate de fer hemi-hydraté, sulfate de fer heptahydraté, carbonate de fer, carbonate de fer hydraté, carbonate de fer hemi-hydraté, chlorure de fer, carbonate de cuivre, carbonate de cuivre hydraté, carbonate de cuivre hemi-hydraté, acétate de cuivre, sulfate de cuivre, sulfate de cuivre pentahydraté, hydroxyde de cuivre, halogénure de cuivre.

La réaction de polymérisation pour la préparation du polymère selon l'invention est mise en œuvre à une température d'au moins 50°C. De manière préférée, elle peut être effectuée à une température supérieure à 80°C ou supérieure à 95°C.

Par ailleurs, la réaction de polymérisation peut être réalisée en l'absence d'agent de neutralisation, en particulier en l'absence d'agent basique de neutralisation. Néanmoins, le polymère selon l'invention peut être neutralisé, notamment à l'issue de la réaction de polymérisation. Le polymère selon l'invention peut être totalement ou partiellement neutralisé. Selon l'invention, la neutralisation du polymère est réalisée en neutralisant ou en salifiant tout ou partie des fonctions acides carboxyliques présentes au sein du polymère.

De manière préférée, la neutralisation est réalisée au moyen d'une base, par exemple au moyen d'un dérivé de métal alcalin ou d'un dérivé de métal alcalino-terreux. Les bases préférées sont choisies parmi le ZnO, MgO, NaOH, KOH, NH₄OH, Ca(OH)₂, Mg(OH)₂, monoisopropylamine, triéthanolamine, triisopropylamine, 2-amino-2-méthyl-1-propanol (AMP), triéthylamine, diéthylamine, monoéthylamine. De manière particulièrement préférée, la neutralisation est réalisée au moyen de ZnO, MgO, NaOH, Ca(OH)₂, Mg(OH)₂, seuls ou combinés.

Lors de la préparation du polymère selon l'invention, une étape de séparation peut également être mise en œuvre. Selon l'invention, la séparation peut être mise en œuvre après la neutralisation totale ou partielle du polymère selon l'invention. Elle peut également être mise en œuvre avant la neutralisation du polymère.

La solution aqueuse du polymère, totalement ou partiellement neutralisé, peut être traitée selon des procédés de fractionnement statiques ou dynamiques connus en tant que tels. On utilise alors un ou plusieurs solvants polaires appartenant notamment au groupe constitué par méthanol, éthanol, n-propanol, isopropanol, butanols, acétone, tétrahydrofurane, produisant ainsi une séparation en deux phases. Lors de la séparation, la phase la moins dense comporte la majeure fraction du solvant polaire et la fraction de polymères de bas poids moléculaire, la phase aqueuse la plus dense comporte la fraction de polymères de plus haut poids moléculaire. La température à laquelle s'effectue le traitement de sélection de la fraction de polymère peut influencer le coefficient de partage. Elle est généralement comprise entre 10 et 80°C, de préférence entre 20 et 60°C. Lors de la séparation, il est important de contrôler le rapport des quantités d'eau de dilution et de solvants polaires.

Lors de la mise en œuvre d'une méthode de séparation dynamique, par exemple par centrifugation, les rapports des fractions extraites dépendent généralement des conditions de centrifugation. La sélection de la fraction des polymères peut également être améliorée en traitant à nouveau la phase aqueuse la plus dense, au moyen d'une nouvelle quantité de solvant polaire, qui peut être différent. Il peut également s'agir d'un mélange de solvants polaires. Enfin, la phase liquide obtenue après traitement peut être soumise à distillation pour éliminer le ou les solvants utilisés pour le traitement.

Outre un polymère et une méthode de préparation de ce polymère, l'invention concerne une méthode de préparation d'une suspension aqueuse de particules de matière minérale. La suspension selon l'invention comprend un mélange dans l'eau de particules de matière minérale et d'au moins un polymère selon l'invention.

De préférence, la suspension aqueuse selon l'invention possède un extrait sec en matière minérale supérieur à 60 % en poids. Plus préférentiellement, l'extrait sec de la suspension selon l'invention est supérieur à 70 % en poids, plus préférentiellement supérieur à 75 % en poids ou supérieur à 80 % en poids de la suspension.

De manière préférée, la méthode selon l'invention met en œuvre au moins une matière minérale synthétique ou d'origine naturelle.

De manière également préférée, la méthode selon l'invention met en œuvre au moins une matière minérale choisie parmi les carbonates de métal alcalino-terreux, de préférence carbonate de calcium (carbonate de calcium naturel ou carbonate de calcium précipité), carbonate de strontium, carbonate de magnésium, carbonate de baryum, dolomie, kaolin, dioxyde de titane, talc, chaux, sulfate de calcium, sulfate de baryum, hydroxyde de magnésium. De manière plus préférée, la méthode selon l'invention met en œuvre au moins une matière minérale choisie parmi carbonate de calcium naturel, carbonate de calcium précipité, dolomie, kaolin, kaolin calciné, dioxyde de titane, talc, chaux, hydroxyde de magnésium.

La méthode selon l'invention peut mettre en œuvre une unique matière minérale ou bien plusieurs matières minérales. Ainsi, la méthode selon l'invention peut mettre en œuvre deux ou trois matières minérales. En particulier, la méthode selon l'invention peut mettre en œuvre du carbonate de calcium et au moins une autre matière minérale choisie parmi dolomie, kaolin, kaolin calciné, dioxyde de titane, talc, chaux, notamment du carbonate de calcium et du kaolin ou du carbonate de calcium et de la chaux. De même, la méthode selon l'invention peut mettre en œuvre du dioxyde de titane et au moins une autre matière minérale choisie parmi carbonate de calcium, dolomie, kaolin, talc, chaux, notamment du dioxyde de titane et du kaolin ou du dioxyde de titane et de la chaux. Également, la méthode selon l'invention peut mettre en œuvre du kaolin ou du kaolin calciné et au moins une autre matière minérale choisie parmi dolomie, talc, chaux. La méthode selon l'invention peut également mettre en œuvre du talc et de la chaux ou du talc et de la dolomie.

De manière avantageuse, la méthode de préparation d'une suspension aqueuse de particules de matière minérale selon l'invention permet de mettre en suspension des particules de matière minérale de différentes tailles. Selon l'invention, la taille des particules est mesurée par sédimentation.

Selon l'invention, la taille des particules peut être définie par leur diamètre médian d₅₀ pour lequel la moitié en poids d'une population de particules a une taille inférieure à une valeur donnée. Ainsi, les particules ayant une taille inférieure à 50 µm sont des particules appartenant à une population dont la moitié en poids a un diamètre inférieur à 50 µm. De manière préférée, la méthode selon l'invention concerne la préparation de particules dont la taille est inférieure à 50 µm ou bien dont la taille va de 0,05 à 50 µm.

De manière plus préférée selon l'invention, les particules de matière minérale ont une taille inférieure à 10 µm ou encore inférieure à 5 µm ou à 2 µm. Plus préférentiellement, la taille des particules de matière minérale est inférieure à 1 µm ou inférieure à 0,5 µm.

De manière également préférée selon l'invention, au moins 50 % en poids des particules ont une taille allant de 0,5 à 50 µm ou bien une taille inférieure à 10 µm. En particulier, au moins 50 % en poids des particules ont une taille inférieure à 5 µm ou à 2 µm, voire inférieure à 1 µm.

De manière avantageuse selon l'invention, au moins 60 % en poids des particules ont une taille allant de 0,5 à 50 µm ou bien une taille inférieure à 10 µm. En particulier, au moins 60 % en poids des particules ont une taille inférieure à 5 µm ou à 2 µm, voire inférieure à 1 µm. De manière également avantageuse selon l'invention, au moins 75 % en poids des particules ont une taille allant de 0,5 à 50 µm ou bien une taille inférieure à 10 µm. En particulier, au moins 75 % en poids des particules ont une taille inférieure à 5 µm ou à 2 µm, voire inférieure à 1 µm.

De manière également avantageuse selon l'invention, au moins 90 % en poids des particules ont une taille allant de 0,5 à 50 µm ou bien une taille inférieure à 10 µm. En particulier, au moins 90 % en poids des particules ont une taille inférieure à 5 µm ou à 2 µm, voire inférieure à 1 µm.

Selon l'invention, une population de particules minérales peut également être définie par un diamètre équivalent sphérique (esd). De manière préférée selon l'invention, le diamètre équivalent sphérique des particules ayant une taille inférieure à 50 µm est égal à 50 % en poids. Dans ce cas, 50 % en poids des particules ont une taille inférieure à 50 µm. De manière également préférée selon l'invention, le diamètre équivalent sphérique des particules de taille allant de 0,05 à 50 µm ou de taille inférieure à 50 µm, est égal à 60 % en poids ou égal à 70 % en poids ou encore égal à 80 % en poids ou encore égal à 90 % en poids.

De manière plus préférée selon l'invention, le diamètre équivalent sphérique des particules pour une taille inférieure à 10 µm est égal à 60 % en poids ou égal à 70 % en poids ou encore égal à 80 % en poids ou encore égal à 90 % en poids.

De manière bien plus préférée selon l'invention, le diamètre équivalent sphérique des particules pour une taille inférieure à 5 µm est égal à 60 % en poids ou égal à 70 % en poids ou encore égal à 80 % en poids ou encore égal à 90 % en poids.

De manière encore plus préférée selon l'invention, le diamètre équivalent sphérique des particules pour une taille inférieure à 2 µm est égal à 60 % en poids ou égal à 70 % en poids ou encore égal à 80 % en poids ou encore égal à 90 % en poids.

De manière tout particulièrement préférée selon l'invention, le diamètre équivalent sphérique des particules pour une taille inférieure à 1 µm est égal à 60 % en poids ou égal à 70 % en poids ou égal à 80 % en poids ou encore égal à 90 % en poids.

L'invention concerne également une méthode de préparation de particules de matière minérale comprenant le broyage, en présence d'eau, d'au moins une matière minérale en présence d'au moins un polymère selon l'invention.

Pour la méthode de broyage selon l'invention, le polymère, la matière minérale et les particules sont définis de manière identique au polymère, matière minérale et particules définis pour la méthode de préparation d'une suspension aqueuse de particules de matière minérale selon l'invention.

Ainsi, l'invention concerne également l'utilisation d'au moins un polymère selon l'invention comme agent d'aide au broyage, de préférence dans l'eau, d'au moins une matière minérale.

Lors de la mise en œuvre de la méthode de broyage selon l'invention, la matière minérale mise en œuvre peut se présenter sous différentes formes, notamment sous la forme de grains de taille grossière issus de blocs ou de morceaux de matière minérale concassée.

Lors du broyage selon l'invention, la taille des grains, notamment des grains de taille grossière, de matière minérale ou des morceaux de matière minérale mis en œuvre est réduite jusqu'à obtenir des particules. La méthode selon l'invention est particulièrement efficace pour contrôler la taille des particules préparées lors du broyage de la matière minérale.

Les méthodes de broyage et de préparation d'une suspension aqueuse de particules de matière minérale selon l'invention permettent d'obtenir une composition aqueuse de particules de matière minérale.

Notamment selon sa concentration en matière minérale de la composition aqueuse de particules de matière minérale selon l'invention, elle peut être utilisée dans différents domaines techniques.

Ainsi, l'invention fournit une composition aqueuse de particules de matière minérale, en particulier une sauce de couchage papetière, comprenant des particules de matière minérale broyée et au moins un polymère selon l'invention.

De manière préférée, la composition aqueuse selon l'invention comprend également au moins un adjuvant, en particulier au moins un adjuvant choisi parmi agents dispersants, agents anti-mousse, agents biocides, agents colorants, agents lubrifiants et agents azurants optiques ou au moins un agent liant, notamment un agent liant naturel comme l'amidon ou un agent liant synthétique comme un latex.

Outre le broyage d'une matière minérale, le polymère selon l'invention est particulièrement avantageux dans d'autres domaines techniques.

L'invention fournit également une méthode de préparation d'une sauce de couchage papetière comprenant le broyage, en présence d'eau, d'au moins une matière minérale en présence d'au moins un polymère selon l'invention.

L'invention concerne également une méthode de préparation de papier comprenant l'utilisation d'une composition aqueuse selon l'invention.

L'invention concerne également une méthode de lavage comprenant l'application d'au moins un polymère selon l'invention, de préférence en combinaison avec au moins un composé tensio-actif.

L'invention concerne également une composition détergente ou anti-tartre comprenant au moins un polymère selon l'invention, de préférence en combinaison avec au moins un composé tensio-actif.

Les caractéristiques particulières, avantageuses ou préférées du polymère et des méthodes de préparation d'une suspension aqueuse ou de broyage selon l'invention définissent d'autres méthodes ou compositions selon l'invention qui sont également particulières, avantageuses ou préférées.

Les exemples qui suivent permettent d'illustrer les différents aspects de l'invention. Les méthodes ou techniques mises en œuvre sont connues ou décrites.

### Masse moléculaire par Chromatographie d'Exclusion Stérique (CES) :

Les poids moléculaires et indices de polymolécularité des polymères obtenus par une réaction de polymérisation radicalaire dans l'eau, à une température supérieure à 50°C, d'au moins un monomère comprenant au moins une insaturation oléfinique polymérisable et une fonction acide carboxylique sont déterminés par chromatographie d'exclusion stérique.

Une prise d'essai de la solution de polymère correspondant à 90 mg de matière sèche est introduite dans un flacon de 10 mL. Il est ajouté de la phase mobile, additionnée de 0,04 % en poids de diméthylformamide (DMF), jusqu'à une masse totale de 10 g. La composition de cette phase mobile est la suivante : NaHCO₃ : 0,05 mol/L, NaNO₃ : 0,1 mol/L, triéthanolamine : 0,02 mol/L, NaN₃ 0,03 % massique.

La chaîne de CES est composée d'une pompe isocratique de type Waters 510, dont le débit est réglé à 0,8 mL/min, d'un passeur d'échantillons Waters 717+, d'un four contenant une précolonne de type Guard Column Ultrahydrogel Waters de 6 cm de longueur et 40 mm de diamètre intérieur, suivie d'une colonne linéaire de type Ultrahydrogel Waters de 30 cm de longueur et 7,8 mm de diamètre intérieur.

La détection est assurée au moyen d'un réfractomètre différentiel de type RI Waters 410. Le four est porté à la température de 60°C et le réfractomètre est porté à la température de 45°C.

Le dispositif de CES est étalonné avec une série d'étalons polyacrylate de sodium fournis par Polymer Standards Service de poids moléculaire au sommet de pic compris entre 1 000 g/mol et 1.10⁶ g/mol et d'indice de polymolécularité compris entre 1,4 et 1,7, ainsi qu'avec un polyacrylate de sodium de poids moléculaire égal à 5 600 g/mol et d'indice de polymolécularité égal à 2,4. La courbe d'étalonnage est de type linéaire et prend en compte la correction obtenue grâce au marqueur de débit : le diméthylformamide (DMF). L'acquisition et le traitement du chromatogramme sont effectués par l'utilisation du logiciel PSS WinGPC Scientific v 4.02. Le chromatogramme obtenu est intégré dans la zone correspondant à des poids moléculaires supérieurs à 65 g/mol.

### Technique de broyage et mesure de la granulométrie :

À l'aide d'une pompe péristaltique, des suspensions de grains grossiers de matière minérale préparées en présence d'un polymère selon l'invention sont introduites dans un broyeur Dyno Mill de type KDL pilote 1,4 L contenant 2 850 g de billes en céramiques de type ER 120 S de 0,6 mm à 1,0 mm de diamètre en provenance de la société ZirPro. Les conditions de broyage sont ajustées de manière à obtenir une suspension de particules de matière minérale de granulométrie souhaitée. La quantité nécessaire de polymère introduite dans le système est ajustée afin d'atteindre la granulométrie souhaitée. Cette suspension est ensuite caractérisée par une mesure granulométrique, une mesure de viscosité Brookfield suivie d'un test de stabilité. Ce test de stabilité consiste à mesurer la viscosité Brookfield de la suspension broyée après un temps de repos de 8 jours à une température de 25°C ± 1°C.

Les caractéristiques granulométriques relatives à la préparation de particules de matière minérale sont déterminées à partir d'un appareil SediGraph III 5120 (Micromeritics, USA). De manière connue, cette méthode ainsi que cet instrument de mesure permettent de mesurer la répartition granulométrique des suspensions de particules de matière minérale. Ils permettent notamment de déterminer la fraction massique en pourcentage d'une population de particules minérales dont la diamètre sphérique équivalent est inférieur à 1 µm ou bien à 2 µm (esd < 1µm ou bien esd < 2 µm, tous les deux exprimés en %). Ces mesures sont réalisées à partir d'une suspension de particules de matière minérale diluée à une concentration d'environ 33 g de matière sèche par litre de solution d'un polyacrylate de sodium de poids moléculaire égal à 4 000 g/mol et de concentration égale à 1,6 g de polyacrylate de sodium sec par litre de solution. Cet échantillon est dispersé et soniqué avant la mesure.

### Mesure de viscosité Brookfield :

Les viscosités Brookfield (mPa.s) des suspensions de particules de matière minérale préparées selon la méthode de l'invention sont mesurées après l'opération de broyage (VB0) et après 8 jours de repos (VB8), à 25°C ± 1°C et à une vitesse de rotation de 100 tour/min à l'aide d'un viscosimètre Brookfield DVIII équipé d'un module adapté, par exemple 2 à 5.

### Exemple 1 : préparation de polymères neutralisés selon l'invention :

Dans un réacteur agité, on introduit un mélange (R) d'eau, de phosphite de calcium sous forme hydratée et d'hypophosphite de sodium sous forme hydratée. Puis, on prépare le mélange 1 (M1), le mélange 2 (M2) et le mélange 3 (M3) à partir d'eau, d'acide acrylique (AA), de persulfate de sodium, et d'hypophosphite de sodium sous forme hydratée. On chauffe alors le réacteur de manière à atteindre la température T de polymérisation (97 ± 2°C) et on introduit en parallèle les mélanges 1, 2 et 3 dans le réacteur. Enfin, on refroidit le réacteur et on neutralise le polymère, au moyen d'une solution aqueuse de soude à 50 %, en injectant le mélange (MN) de neutralisation préalablement préparé. La neutralisation est effectuée afin d'obtenir une solution polymérique dont le pH est supérieur à 6, en général un pH de 8 à 9. Les quantités (en g) de réactifs, les conditions réactionnelles, la concentration en poids de phosphite (sec/sec) par rapport à la quantité totale de phosphite et d'hypophosphite ainsi que les caractéristiques des polymères (masse moléculaire Mw et indice de polymolécularité IP) préparés sont présentées dans le tableau 1.

**Tableau 1**

| Exemple | | 1-1 | 1-2 | 1-3 | 1-4 | 1-5 | 1-6 |
|---|---|---|---|---|---|---|---|
| R | Eau | 326,87 | 326,87 | 790 | 790 | 790 | 326,87 |
| | CaHPO₃ | 2,59 | 5,18 | 15,02 | 18,00 | 23,93 | 12,94 |
| | NaH₂PO₂ | 2,37 | 2,11 | 12,43 | 12,41 | 12,38 | 5,26 |
| M1 | acide acrylique | 508,41 | 508,41 | 1223,88 | 1227,04 | 1223,40 | 508,41 |
| | Eau | 37,66 | 37,66 | | | | 37,66 |
| M2 | persulfate de sodium | 4,23 | 4,23 | 10,23 | 10,22 | 10,19 | 4,23 |
| | Eau | 112,28 | 112,28 | 100,00 | 100,00 | 100,00 | 112,28 |
| M3 | NaH₂PO₂ | 21,32 | 18,95 | 37,30 | 37,25 | 37,14 | 15,79 |
| | Eau | 93,9 | 93,9 | 200,0 | 200,0 | 200,0 | 93,9 |
| MN | NaOH à 50 % dans l'eau | qsp pH 8-9 | | | | | |
| [CaHP03] (ppm) | | 98 554 | 197 408 | 231 969 | 266 036 | 325 800 | 380 700 |
| Mw (g/mol) | | 5 225 | 6 140 | 5 435 | 5 555 | 5 450 | 5 515 |
| IP | | 2,2 | 2,4 | 2,2 | 2,3 | 2,3 | 2,3 |

On constate que les conditions réactionnelles mises en œuvre selon l'invention permettent de préparer des polymères dont la masse moléculaire et l'indice de polymolécularité sont bien contrôlés.

Les polymères peuvent être utilisés comme agent d'aide au broyage de carbonate de calcium naturel.

### Exemple 2 : broyage de carbonate de calcium d'esd inférieur à 1 µm égal à 80 % en poids :

On prépare des suspensions aqueuses de carbonate de calcium naturel ayant une teneur en poids de solide de 76 % ± 1 % pour un esd inférieur à 1 µm égal à 80 % en poids. Elles sont préparées en présence d'une quantité de 1,07 % en poids sec d'une solution aqueuse de polymère, en tant qu'agent d'aide au broyage, par rapport à la quantité sèche de carbonate de calcium engagé dans cette opération de broyage en vue d'atteindre la granulométrie visée. Les solutions de polymère ont une concentration de 35 % ± 1 % en matière active et un pH de 8,5 ± 0,5. La matière première pour préparer ces suspensions aqueuses est une suspension aqueuse de carbonate de calcium de grains grossiers à 75 % ± 1 % de teneur en poids de solide. Le carbonate de calcium est un marbre grossier (produit commercial Omyacarb 10 AV Omya) en provenance de la région de Carrare (Italie). Les conditions de broyage sont ajustées de manière à obtenir une suspension de particules minérales dont 80,0 % ± 0,5 % en poids de sa population a un diamètre sphérique équivalent inférieur à 1 µm (esd < 1µm = 80,0 % ± 0,5 %).

Les suspensions selon l'invention sont ensuite analysées et caractérisées par des mesures de viscosité Brookfield (mPa.s) après l'opération de broyage (VB0) puis après 8 jours de repos (VB8) à 25°C. Les résultats sont présentés dans le tableau 2.

**Tableau 2**

| Suspension | Polymère | VB0 | VB8 |
|---|---|---|---|
| S1-1 | 1-1 | 313 | 649 |
| S1-2 | 1-2 | 323 | 707 |
| S1-3 | 1-3 | 296 | 601 |
| S1-4 | 1-4 | 327 | 692 |
| S1-5 | 1-5 | 320 | 702 |
| S1-6 | 1-6 | 324 | 781 |

L'utilisation d'un agent d'aide au broyage selon l'invention permet de préparer des suspensions de carbonate de calcium broyé de faible viscosité. La viscosité de ces suspensions évolue faiblement dans le temps sur une période de 8 jours. La suspension préparée selon l'invention possède une viscosité plus faible que celle des suspensions de l'état de la technique. Elle est donc plus stable au stockage.

## Revendications

1. Polymère de masse moléculaire en poids M_{W}, telle que mesurée par chromatographie d'exclusion stérique, inférieure à 8 000 g/mol et d'indice de polymolécularité IP inférieur à 3, obtenu par au moins une réaction de polymérisation radicalaire dans l'eau et à une température supérieure à 50°C, d'au moins un monomère anionique comprenant au moins une insaturation oléfinique polymérisable et au moins une fonction acide carboxylique, en présence :
(a) d'au moins un composé (a) comprenant du phosphore au degré d'oxydation I,
(b) d'au moins 5 % en poids d'au moins un composé (b) comprenant du phosphore au degré d'oxydation III, par rapport à la quantité totale en poids de composés (a) et (b),
(c) d'au moins un composé (c) générateur de radicaux choisi parmi peroxyde d'hydrogène, benzoyl peroxyde, acetyl peroxyde, lauryl peroxyde, hydroperoxyde de tertiobutyle, cumene hydroperoxyde, persulfate d'ammonium, un persulfate de métal alcalin, un composé azoïque, tels que 2,2'-azobis(2-(4,5-dihydroimidazolyl)propane, dihydrochlorure de 2,2'-azobis(2-méthylpropionamidine), diazo-valéro-nitrile, acide 4,4'-azobis-(4-cyanovalérique), AZDN ou 2,2'-azo-bis-isobutyronitrile, et leurs mélanges, éventuellement associés à un ion choisi parmi Fe^{II}, Fe^{III}, Cu^{I}, Cu^{II}.

2. Polymère selon la revendication 1 dont :
- la masse moléculaire moyenne en poids Mw est inférieure à 7 500 g/mol, de préférence inférieure à 6 500 g/mol, inférieure à 6 000 g/mol, plus préférentiellement inférieure à 5 500 g/mol ou
- la masse moléculaire moyenne en poids Mw est supérieure à 1 000 g/mol ou supérieure à 1 200 g/mol ou supérieure à 1 500 g/mol ou
- la masse moléculaire moyenne en poids Mw va de 3 500 g/mol à 5 500 ou 6 500 g/mol, de manière préférée de 4 500 g/mol à 5 500 ou 6 500 g/mol ou
- l'indice de polymolécularité IP est inférieur à 2,8 ou va de 1,5 à 3, ou de 1,5 à 2,8 ou de 1,5 à 2,5.

3. Polymère selon l'une des revendications 1 ou 2 pour lequel le monomère anionique comprenant au moins une insaturation oléfinique polymérisable comprend une ou deux fonctions acides carboxyliques, de préférence comprend une seule fonction acide carboxylique, de préférence choisi parmi acide acrylique, acide méthacrylique, un sel d'acide acrylique, un sel d'acide méthacrylique et leurs mélanges, plus préférentiellement l'acide acrylique.

4. Polymère selon l'une des revendications 1 à 3 pour lequel le composé (a) est un composé minéral ou bien est l'acide hypophosphoreux (H₃PO₂) ou un dérivé de l'acide hypophosphoreux, de préférence un composé comprenant au moins un ion hypophosphite (H₂PO₂⁻), plus préférentiellement un composé choisi parmi hypophosphite de sodium (H₂PO₂Na), hypophosphite de potassium (H₂PO₂K), hypophosphite de calcium ([H₂PO₂]₂Ca) et leurs mélanges ; ou pour lequel :
- le composé (a) est mis en œuvre en une quantité d'au plus 95 % en poids ou d'au plus 94 % en poids ou d'au plus 92,5 % en poids, de préférence en une quantité allant de 5 à 95 % en poids, plus préférentiellement de 50 à 95 % en poids ou de 50 à 80 % en poids ou encore de 50 à 70 % en poids, par rapport à la quantité totale en poids de composés (a) et (b) ; ou
- le composé (a) est mis en œuvre en une quantité allant de 0,01 à 10 % en poids par rapport à la quantité de monomère, de préférence de 0,01 à 5 ou 6 % en poids ou de 0,01 à 2 ou 3 % en poids par rapport à la quantité de monomère.

5. Polymère selon l'une des revendications 1 à 4 pour lequel le composé (b) est un composé minéral ou bien est l'acide phosphoreux (H₃PO₃) ou un dérivé de l'acide phosphoreux, de préférence un composé comprenant au moins un ion phosphite (HPO₃²⁻), plus préférentiellement un composé choisi parmi acide phosphoreux, phosphite de sodium (HPO₃Na₂), phosphite de potassium (HPO₃K₂), phosphite de calcium (HPO₃Ca) et leurs mélanges ; ou pour lequel le composé (b) est mis en œuvre en une quantité supérieure à 6 % en poids ou supérieure à 7,5 % en poids, de préférence supérieure à 10 % en poids, supérieure à 12,5 % en poids ou supérieure à 15 % en poids, aussi préférentiellement supérieure à 20 % en poids, supérieure à 25 % en poids, supérieure à 30 % en poids ou supérieure à 40 % en poids, par rapport à la quantité totale en poids de composés (a) et (b).

6. Polymère selon l'une des revendications 1 à 5 pour lequel le composé (c) est choisi parmi le peroxyde d'hydrogène, persulfate d'ammonium, persulfate de sodium, persulfate de potassium et leurs mélanges ; ou pour lequel le composé (c) est mis en œuvre en une quantité allant :
- de 0,1 à 5 % en poids de composé générateur de radicaux par rapport à la quantité en poids de monomère ; de préférence
- de 0,5 à 4,5 % en poids de peroxyde d'hydrogène par rapport à la quantité en poids de monomère ; ou
- de 0,1 à 4 % en poids de persulfate d'ammonium ou de persulfate de métal alcalin, en particulier de persulfate de sodium ou de persulfate de potassium, par rapport à la quantité en poids de monomère.

7. Polymère selon l'une des revendications 1 à 6 pour lequel la réaction de polymérisation est réalisée en l'absence d'agent de neutralisation, de préférence en l'absence d'agent basique de neutralisation ; ou pour lequel la réaction de polymérisation met également en œuvre au moins un monomère choisi parmi :
- un autre monomère anionique différent choisi parmi acide acrylique, acide méthacrylique, acide itaconique, acide maléique, leurs sels et leurs mélanges,
- un monomère non-ionique comprenant au moins une insaturation oléfinique polymérisable, de préférence au moins une insaturation éthylénique polymérisable et notamment une fonction vinylique polymérisable, plus préférentiellement un monomère non-ionique choisi parmi styrène, vinylcaprolactame, les esters d'un acide comprenant au moins une fonction acide monocarboxylique, en particulier un ester d'un acide choisi parmi acide acrylique, acide méthacrylique, et leurs mélanges, par exemple acrylate d'alkyle, en particulier acrylate de C₁-C₁₀-alkyl, préférentiellement acrylate de C₁-C₄-alkyl, plus préférentiellement acrylate de méthyle, acrylate d'éthyle, acrylate de propyle, acrylate d'isobutyle, acrylate de n-butyle, méthacrylate d'alkyle, en particulier méthacrylate de C₁-C₁₀-alkyl, préférentiellement méthacrylate de C₁-C₄-alkyl, plus préférentiellement méthacrylate de méthyle, méthacrylate d'éthyle, méthacrylate de propyle, méthacrylate d'isobutyle, méthacrylate de n-butyle, acrylate d'aryle, de préférence phénylacrylate, benzylacrylate, phénoxyéthylacrylate, méthacrylate d'aryle, de préférence phénylméthacrylate, benzylméthacrylate, phénoxyéthylméthacrylate, un composé de formule (I) :
R¹-(L¹)ₘ-(L²)ₙ-R² (I)
dans laquelle :
o R¹ représente un groupement acrylate polymérisable ou un groupement méthacrylate polymérisable,
o R² représente un groupement OH ou un groupement OCH₃,
o L¹ et L², identiques ou différents, représentent indépendamment un groupement éthylèneoxy ou un groupement propylèneoxy et
o m et n, identiques ou différents et dont au moins un est différent de 0, représentent un nombre inférieur ou égal à 150 et leur somme m + n est inférieure à 150 et
- acide 2-acrylamido-2-méthylpropane sulfonique, un sel d'acide 2-acrylamido-2-méthylpropane sulfonique, acide 2-(méthacryloyloxy)éthanesulfonique, un sel d'acide 2-(méthacryloyloxy)éthanesulfonique, méthallyl sulfonate de sodium, styrène sulfonate de sodium et leurs mélanges.

8. Polymère selon l'une des revendications 1 à 7 pour lequel la réaction de polymérisation met en œuvre :
- 100 % en poids de monomère anionique ou
- de 70 à 99,5 % en poids de monomère anionique et de 0,5 à 30 % en poids d'au moins un monomère choisi parmi :
o un autre monomère anionique différent choisi parmi acide acrylique, acide méthacrylique, acide itaconique, acide maléique, leurs sels et leurs mélanges,
o un monomère non-ionique comprenant au moins une insaturation oléfinique polymérisable, de préférence au moins une insaturation éthylénique polymérisable et notamment une fonction vinylique polymérisable, plus préférentiellement un monomère non-ionique choisi parmi styrène, vinylcaprolactame, les esters d'un acide comprenant au moins une fonction acide monocarboxylique, en particulier un ester d'un acide choisi parmi acide acrylique, acide méthacrylique, et leurs mélanges, par exemple acrylate d'alkyle, en particulier acrylate de C₁-C₁₀-alkyl, préférentiellement acrylate de C₁-C₄-alkyl, plus préférentiellement acrylate de méthyle, acrylate d'éthyle, acrylate de propyle, acrylate d'isobutyle, acrylate de n-butyle, méthacrylate d'alkyle, en particulier méthacrylate de C₁-C₁₀-alkyl, préférentiellement méthacrylate de C₁-C4-alkyl, plus préférentiellement méthacrylate de méthyle, méthacrylate d'éthyle, méthacrylate de propyle, méthacrylate d'isobutyle, méthacrylate de n-butyle, acrylate d'aryle, de préférence phénylacrylate, benzylacrylate, phénoxyéthylacrylate, méthacrylate d'aryle, de préférence phénylméthacrylate, benzylméthacrylate, phénoxyéthylméthacrylate, un composé de formule (I) :
R¹-(L¹)ₘ-(L²)ₙ-R² (I)
dans laquelle :
▪ R¹ représente un groupement acrylate polymérisable ou un groupement méthacrylate polymérisable,
▪ R² représente un groupement OH ou un groupement OCH₃,
▪ L¹ et L², identiques ou différents, représentent indépendamment un groupement éthylèneoxy ou un groupement propylèneoxy et
▪ m et n, identiques ou différents et dont au moins un est différent de 0, représentent un nombre inférieur ou égal à 150 et leur somme m + n est inférieure à 150 et
∘ acide 2-acrylamido-2-méthylpropane sulfonique, un sel d'acide 2-acrylamido-2-méthylpropane sulfonique, acide 2-(méthacryloyloxy)éthanesulfonique, un sel d'acide 2-(méthacryloyloxy)éthanesulfonique, méthallyl sulfonate de sodium, styrène sulfonate de sodium et leurs mélanges.

9. Méthode de préparation d'une suspension aqueuse de particules de matière minérale, de préférence d'une suspension aqueuse dont l'extrait sec en matière minérale est supérieur à 60 % en poids, de préférence supérieur à 70 % en poids, plus préférentiellement supérieur à 75 % en poids ou à 80 % en poids de la suspension, comprenant le mélange dans de l'eau de particules de matière minérale et d'au moins un polymère selon l'une des revendications 1 à 8.

10. Méthode de préparation de particules de matière minérale comprenant le broyage, en présence d'eau, d'au moins une matière minérale en présence d'au moins un polymère selon l'une des revendications 1 à 8.

11. Méthode selon la revendication 9 ou selon la revendication 10 pour laquelle :
- les particules ont une taille inférieure à 50 µm ou bien une taille allant de 0,05 à 50 µm ou bien une taille inférieure à 10 µm, de préférence inférieure à 5 µm ou à 2 µm, plus préférentiellement inférieure à 1 µm ou inférieure à 0,5 µm ou
- le diamètre équivalent sphérique des particules pour une taille allant de 0,05 à 50 µm ou inférieure à 50 µm, de préférence pour une taille inférieure à 10 µm, plus préférentiellement inférieure à 5 µm ou à 2 µm, encore plus préférentiellement inférieure à 1 µm ou inférieure à 0,5 µm, est égal à 60 % en poids ou égal à 70 % en poids ou encore égal à 80 % en poids ou bien encore égal à 90 % en poids.

12. Méthode selon l'une des revendications 9 à 11 pour laquelle :
- une seule matière minérale ou deux ou trois matières minérales sont mises en œuvre ou pour laquelle :
- la matière minérale est synthétique ou d'origine naturelle, de préférence choisie parmi le carbonate de métal alcalino-terreux, de préférence carbonate de calcium (carbonate de calcium naturel ou carbonate de calcium précipité), carbonate de strontium, carbonate de magnésium, carbonate de baryum, dolomie, kaolin, dioxyde de titane, talc, chaux, sulfate de calcium, sulfate de baryum, hydroxyde de magnésium.

13. Composition aqueuse, en particulier une sauce de couchage papetière, comprenant des particules de matière minérale broyée et au moins un polymère défini selon l'une des revendications 1 à 8, notamment composition comprenant également au moins un adjuvant, en particulier au moins un adjuvant choisi parmi les agents dispersants, agents anti-mousse, agents biocides, agents colorants, agents lubrifiants et agents azurants optiques ou au moins un agent liant, notamment un agent liant naturel comme l'amidon ou un agent liant synthétique comme un latex.

14. Utilisation, de préférence dans l'eau, comme agent d'aide au broyage d'au moins une matière minérale, de préférence d'une matière minérale définie selon l'une des revendications 10 ou 11, d'au moins un polymère défini selon l'une des revendications 1 à 8.

15. Méthode de préparation de papier comprenant l'utilisation d'une composition aqueuse selon l'une des revendications 12 à 13.

16. Méthode de lavage comprenant l'application d'au moins un polymère selon l'une des revendications 1 à 8, de préférence en combinaison avec au moins un composé tensio-actif.

17. Composition détergente ou anti-tartre comprenant au moins un polymère selon l'une des revendications 1 à 8, de préférence en combinaison avec au moins un composé tensio-actif.

## Patentansprüche

1. Polymer mit einer gewichtsgemittelten molekularen Masse Mw, wie etwa durch sterische Ausschlusschromatographie gemessen, von unter 8.000 g/mol und einem Polymolekularitätsindex IP von weniger als 3, das durch mindestens eine radikalische Polymerisationsreaktion in Wasser bei einer Temperatur über 50 °C aus mindestens einem anionischen Monomer mit mindestens einer polymerisierbaren olefinischen Ungesättigtheit und mindestens einer Carbonsäurefunktion hergestellt wird, in Gegenwart von:
(a) mindestens einer Verbindung (a), die Phosphor mit Oxidationsgrad I beinhaltet,
(b) mindestens 5 Gew.-% mindestens einer Verbindung (b), die Phosphor mit Oxidationsgrad III, bezogen auf die gesamte Gewichtsmenge an Verbindungen (a) und (b), beinhaltet,
(c) mindestens einer radikalbildenden Verbindung (c), ausgewählt aus Wasserstoffperoxid, Benzoylperoxid, Acetylperoxid, Laurylperoxid, Tert-Butylhydroperoxid, Cumenhydroperoxid, Ammoniumpersulfat, einem Alkalimetallpersulfat, einer Azoverbindung, wie 2,2'-Azobis(2-(4,5-Dihydroimidazolyl)propan, 2,2'-Azobis(2-Methylpropionamidin)-Dihydrochlorid, Diazo-Valero-Nitril, 4,4'-Azobis(4-Cyanovaleriansäure), AZDN oder 2,2'-Azobis-Isobutyronitril und Mischungen davon, eventuell in Verbindung mit einem Ion, ausgewählt aus Fe^{II}, Fe^{III}, Cu^{I}, Cu^{II}.

2. Polymer nach Anspruch 1, das:
- eine gewichtsgemittelte molekulare Masse Mw von unter 7.500 g/mol, vorzugsweise unter 6.500 g/mol, unter 6.000 g/mol, noch mehr bevorzugt unter 5.500 g/mol hat, oder
- eine gewichtsgemittelte molekulare Masse Mw von über 1.000 g/mol oder über 1.200 g/mol oder über 1.500 g/mol hat, oder
- eine gewichtsgemittelte molekulare Masse Mw von 3.500 g/mol bis 5.500 oder 6.500 g/mol, vorzugsweise von 4.500 g/mol bis 5.500 oder 6.500 g/mol hat, oder
- einen Polymolekularitätsindex IP unter 2,8 hat, der zwischen 1,5 und 3 oder zwischen 1,5 und 2,8 oder zwischen 1,5 und 2,5 variiert.

3. Polymer nach einem der Ansprüche 1 oder 2, wobei das anionische Monomer, das mindestens eine polymerisierbare olefinische Ungesättigtheit hat, eine oder zwei Carbonsäurefunktionen beinhaltet, vorzugsweise eine einzige Carbonsäurefunktion, bevorzugterweise ausgewählt aus Acrylsäure, Methacrylsäure, einem Salz der Acrylsäure, einem Salz der Methacrylsäure und Mischungen davon, noch mehr bevorzugt Acrylsäure.

4. Polymer nach einem der Ansprüche 1 bis 3, wobei die Verbindung (a) eine mineralische Verbindung ist, oder eine hypophosphorige Säure (H₃PO₂) oder ein Derivat der hypophosphorigen Säure, vorzugsweise eine Verbindung mit mindestens einem Hypophosphit-Ion (H₂PO₂⁻), noch mehr bevorzugt eine Verbindung ausgewählt aus Natriumhypophosphit (H₂PO₂Na), Kaliumhypophosphit (H₂PO₂K), Calciumhypophosphit ([H₂PO₂]₂Ca) und Mischungen davon, oder wobei:
- die Verbindung (a) in einer Menge von höchstens 95 Gew.-% oder höchstens 94 Gew.-% oder höchstens 92,5 Gew.-% verwendet wird, vorzugsweise in einer Menge zwischen 5 und 95 Gew.-%, noch mehr bevorzugt zwischen 50 und 95 Gew.-% oder 50 und 80 Gew.-% oder auch 50 und 70 Gew.-%, bezogen auf die gesamte Gewichtsmenge an Verbindungen (a) und (b); oder
- die Verbindung (a) in einer Menge zwischen 0,01 und 10 Gew.-%, bezogen auf die Menge an Monomeren, verwendet wird, vorzugsweise zwischen 0,01 und 5 oder 6 Gew.-% oder zwischen 0,01 und 2 oder 3 Gew.-%, bezogen auf die Menge an Monomeren.

5. Polymer nach einem der Ansprüche 1 bis 4, wobei die Verbindung (b) eine mineralische Verbindung ist, oder eine Phosphorsäure (H₃PO₃) oder ein Derivat der Phosphorsäure, vorzugsweise eine Verbindung mit mindestens einem Phosphit-Ion (HPO₃²⁻), noch mehr bevorzugt eine Verbindung ausgewählt aus Phosphorsäure, Natriumhypophosphit (HPO₃Na₂), Kaliumhypophosphit (HPO₃K₂), Calciumhypophosphit (HPO₃Ca) und Mischungen davon, oder wobei die Verbindung (b) eine Menge über 6 Gew.-% oder über 7,5 Gew.-%, noch mehr bevorzugt über 10 Gew.-%, über 12,5 Gew.-% oder über 15 Gew.-%, auch vorzugsweise über 20 Gew.-%, über 25 Gew.-%, über 30 Gew.-% oder über 40 Gew.-%, bezogen auf die gesamte Gewichtsmenge an Verbindungen (a) und (b), beinhaltet.

6. Polymer nach einem der Ansprüche 1 bis 5, wobei die Verbindung (c) ausgewählt ist aus Wasserstoffperoxid, Ammoniumpersulfat, Natriumpersulfat, Kaliumpersulfat und deren Mischungen, oder wobei die Verbindung (c) in einer folgenden Menge verwendet wird:
- von 0,1 bis 5 Gew.-% der radikalbildenden Verbindung, bezogen auf die Gewichtsmenge an Monomeren; vorzugsweise
- von 0,5 bis 4,5 Gew.-% Wasserstoffperoxid, bezogen auf die Gewichtsmenge an Monomeren; oder
- von 0,1 bis 4 Gew.-% Ammoniumpersulfat oder Alkalimetallpersulfat, insbesondere Natriumpersulfat oder Kaliumpersulfat, bezogen auf die Gewichtsmenge an Monomeren.

7. Polymer nach einem der Ansprüche 1 bis 6, wobei die Polymerisationsreaktion in Abwesenheit eines Neutralisierungsmittels durchgeführt wird, vorzugsweise in Abwesenheit eines basischen Neutralisationsmittels, oder wobei die Polymerisationsreaktion ebenfalls mindestens ein Monomer beinhaltet, das ausgewählt ist aus:
- einem weiteren anionischen Monomer, ausgewählt aus Acrylsäure, Methacrylsäure, Itaconsäure, Maleinsäure, deren Salzen und deren Mischungen,
- einem nicht-ionischen Monomer mit mindestens einer polymerisierbaren olefinischen Ungesättigtheit, vorzugsweise mindestens einer polymerisierbaren ethylenischen Ungesättigtheit und vor allem einer polymerisierbaren funktionellen Vinylgruppe, noch mehr bevorzugt einem nicht-ionischen Monomer, ausgewählt aus Styrol, Vinylcaprolactam, den Estern einer Säure mit mindestens einer MonocarbonsäureFunktion, insbesondere einem Ester einer Säure, ausgewählt aus Acrylsäure, Methacrylsäure und deren Mischungen, beispielsweise Alkylacrylat, insbesondere C₁-C₁₀-Alkylacrylat, vorzugsweise C₁-C₄-Alkylacrylat, noch mehr bevorzugt Methylacrylat, Ethylacrylat, Propylacrylat, Isobutylacrylat, n-Butylacrylat, Alkylmethacrylat, insbesondere C₁-C₁₀-Alkylmethacrylat, vorzugsweise C₁-C₄-Alkylmethacrylat, noch mehr bevorzugt Methylmethacrylat, Ethylmethacrylat, Propylmethacrylat, Isobutylmethacrylat, n-Butylmethacrylat, Arylacrylat, vorzugsweise Phenylacrylat, Benzylacrylat, Phenoxyethylacrylat, Arylmethacrylat, vorzugsweise Phenylmethacrylat, Benzylmethacrylat, Phenoxyethylmethacrylat, einer Verbindung mit der Formel (I):
R¹-(L¹)ₘ-(L²)ₙ-R² (I)
wobei:
o R¹ eine polymerisierbare Acrylatgruppe oder polymerisierbare Methacrylatgruppe ist,
o R² eine OH-Gruppe oder eine OCH3-Gruppe ist,
o L¹ und L², die gleich oder verschieden sein können, unabhängig voneinander eine Ethylenoxy-Gruppe oder eine Propylenoxy-Gruppe darstellen, und
o m und n, die gleich oder verschieden sein können und von denen mindestens eine Größe ungleich 0 ist, eine Zahl von kleiner oder gleich 150 darstellen, wobei deren Summe m+n unter 150 liegt, und
- 2-Acrylamido-2-methylpropansulfonsäure, einem Salz von 2-Acrylamido-2 methylpropansulfonsäure, 2-(Methacryloyloxy)ethansulfonsäure, einem Salz von 2-(Methacryloyloxy)ethansulfonsäure, Natriummethallylsulfonat, Natriumstyrolsulfonat und deren Mischungen.

8. Polymer nach einem der Ansprüche 1 bis 7, bei dem die Polymerisationsreaktion Folgendes umsetzt:
- 100 Gew.-% des anionischen Monomers oder
- 70 Gew.-% bis 99,5 Gew.-% des anionischen Monomers und 0,5 Gew.-% bis 30 Gew.-% mindestens eines Monomers ausgewählt aus:
o einem weiteren Monomer, ausgewählt aus Acrylsäure, Methacrylsäure, Itaconsäure, Maleinsäure, deren Salzen und deren Mischungen,
o einem nicht-ionischen Monomer mit mindestens einer polymerisierbaren olefinischen Ungesättigtheit, vorzugsweise mindestens einer polymerisierbaren ethylenischen Ungesättigtheit und insbesondere einer polymerisierbaren funktionellen Vinylgruppe, noch mehr bevorzugt einem nicht-ionischen Monomer, ausgewählt aus Styrol, Vinylcaprolactam, den Estern einer Säure mit mindestens einer Monocarbonsäurefunktion, insbesondere einem Ester einer Säure, ausgewählt aus Acrylsäure, Methacrylsäure und deren Mischungen, beispielsweise Alkylacrylat, insbesondere C₁-C₁₀-Alkylacrylat, vorzugsweise C₁-C₄-Alkylacrylat, noch mehr bevorzugt Methylacrylat, Ethylacrylat, Propylacrylat, Isobutylacrylat, n-Butylacrylat, Alkylmethacrylat, insbesondere C₁-C₁₀-Alkylmethacrylat, vorzugsweise C₁-C₄-Alkylmethacrylat, noch mehr bevorzugt Methylmethacrylat, Ethylmethacrylat, Propylmethacrylat, Isobutylmethacrylat, n-Butylmethacrylat, Arylacrylat, vorzugsweise Phenylacrylat, Benzylacrylat, Phenoxyethylacrylat, Arylmethacrylat, vorzugsweise Phenylmethacrylat, Benzylmethacrylat, Phenoxyethylmethacrylat, einer Verbindung mit der Formel (I):
R¹-(L¹)ₘ-(L²)ₙ-R² (I)
wobei:
o R¹ eine polymerisierbare Acrylatgruppe oder polymerisierbare Methacrylatgruppe ist,
o R² eine OH-Gruppe oder eine OCH3-Gruppe ist,
o L¹ und L², die gleich oder verschieden sein können, unabhängig voneinander eine Ethylenoxy-Gruppe oder eine Propylenoxy-Gruppe darstellen, und
o m und n, die gleich oder verschieden sein können und von denen mindestens eine Größe ungleich 0 ist, eine Zahl von kleiner oder gleich 150 darstellen, wobei deren Summe m+n unter 150 liegt, und
- 2-Acrylamido-2-methylpropansulfonsäure, einem Salz von 2-Acrylamido-2-methylpropansulfonsäure, 2-(Methacryloyloxy)ethansulfonsäure, einem Salz von 2-(Methacryloyloxy)ethansulfonsäure, Natriummethallylsulfonat, Natriumstyrolsulfonat und Mischungen davon.

9. Verfahren zur Herstellung einer wässrigen Suspension von Mineralstoffpartikeln, vorzugsweise einer wässrigen Suspension mit einem Trockenextrakt an Mineralstoff von über 60 Gew.-%, vorzugsweise über 70 Gew.-%, noch mehr bevorzugt über 75 Gew.-% oder 80 Gew.-% der Suspension, die das Gemisch in Wasser von Mineralstoffpartikeln und mindestens einem Polymer nach einem der Ansprüche 1 bis 8 beinhaltet.

10. Verfahren zur Herstellung von Mineralstoffpartikeln, einschließlich Mahlen, in Anwesenheit von Wasser, von mindestens einem Mineralstoff in Gegenwart von mindestens einem Polymer nach einem der Ansprüche 1 bis 8.

11. Verfahren nach Anspruch 9 oder nach Anspruch 10, wobei:
- die Partikel eine Größe von weniger als 50 µm oder eine Größe von 0,05 bis 50 µm oder eine Größe von unter 10 µm, vorzugsweise unter 5 µm oder unter 2 µm, noch mehr bevorzugt unter 1 µm oder unter 0,5 µm haben, oder
- der äquivalente Kugeldurchmesser der Partikel bei einer Größe von 0,05 bis 50 µm bzw. weniger als 50 µm, vorzugsweise bei einer Größe von unter 10 µm, noch mehr bevorzugt unter 5 µm oder unter 2 µm, noch weiter bevorzugt unter 1 µm oder unter 0,5 µm, 60 Gew.-% oder 70 Gew.-% oder aber 80 Gew.-% oder 90 Gew.-% beträgt.

12. Verfahren nach einem der Ansprüche 9 bis 11, wobei:
- nur ein einziger Mineralstoff wird oder zwei oder drei Mineralstoffe eingesetzt werden oder wobei:
- der Mineralstoff synthetischen oder natürlichen Ursprungs ist, vorzugsweise ausgewählt aus Erdalkalimetallcarbonat, bevorzugt aus Calciumcarbonat (natürliches Calciumcarbonat oder gefälltes Calciumcarbonat), Strontiumcarbonat, Magnesiumcarbonat, Bariumcarbonat, Dolomit, Kaolin, Titandioxid, Talk, Kalkstein, Calciumsulfat, Bariumsulfat, Magnesiumhydroxid.

13. Wässrige Zusammensetzung, insbesondere eine Streichmasse für die Papierindustrie, mit gemahlenen Mineralstoffpartikeln und mindestens einem Polymer nach einem der Ansprüche 1 bis 8, insbesondere eine Verbindung ebenfalls mit mindestens einem Hilfsstoff, insbesondere mindestens einem Hilfsstoff ausgewählt aus Dispersionsmitteln, Antischaummitteln, bioziden Mitteln, Färbemitteln, Schmiermitteln und optischen Aufhellungsmitteln, oder mindestens einem Bindemittel, insbesondere einem natürlichen Bindemittel wie Stärke, oder einem synthetischen Bindemittel wie Latex.

14. Verwendung, vorzugsweise in Wasser, mindestens eines Mineralstoffs, vorzugsweise eines Mineralstoffs nach einem der vorstehenden Ansprüche 10 oder 11 mit mindestens einem Polymer nach einem der vorstehenden Ansprüche 1 bis 8 als Mahlhilfsmittel.

15. Verfahren zur Papierherstellung unter Verwendung einer wässrigen Zusammensetzung nach einem der Ansprüche 12 bis 13.

16. Waschverfahren mit Anwendung mindestens eines Polymers nach einem der Ansprüche 1 bis 8, vorzugsweise in Kombination mit mindestens einer oberflächenaktiven Verbindung.

17. Waschmittel- oder Mundpflegezusammensetzung, bestehend aus mindestens einem Polymer nach einem der Ansprüche 1 bis 8, vorzugsweise in Kombination mit mindestens einer oberflächenaktiven Verbindung.

## Claims

1. Polymer with a molecular mass Mw, as measured by steric emulsion chromatography, less than 8,000 g/mol and a polymolecularity index (PI) of less than 3, obtained by at least one radical polymerisation reaction in water and at a temperature greater than 50°C of at least one anionic monomer comprising at least one polymerisable olefinic unsaturation and at least one carboxylic acid group, in the presence:
(a) of at least one compound (a) comprising phosphorus in the oxidation I state,
(b) of at least 5% by weight of at least one compound (b) comprising phosphorus in the oxidation III state, relative to the total amount by weight of compounds (a) and (b),
(c) of at least one radical-generating compound (c) chosen among hydrogen peroxide, benzoyl peroxide, acetyl peroxide, lauryl peroxide, tertio-Butyl hydroperoxide, cumene hydroperoxide, ammonium persulphate, an alkaline metal persulphate, an azo compound, such as 2,2'-azobis(2-(4,5-dihydroimidazolyl)propane, 2,2'-azobis(2-methylpropionamidine) dihydrochloride, diazo-valeronitrile, 4,4'-azobis-(4-cyanovaleric) acid, AZDN or 2,2'-azobisisobutyronitrile, and combinations thereof, optionally associated with an ion chosen among Fe^{II}, Fe^{III}, Cu^{I}, Cu^{II}.

2. Polymer according to claim 1 in which:
- the weight-average molecular mass Mw is less than 7,500 g/mol, preferably less than 6,500 g/mol, less than 6,000 g/mol, more preferentially less than 5,500 g/mol or
- the weight-average molecular mass Mw is greater than 1,000 g/mol or greater than 1,200 g/mol or greater than 1,500 g/mol or
- the weight average molecular mass Mw ranges from 3,500 g/mol to 5,500 or 6,500 g/mol, preferably from 4,500 g/mol to 5,500 or 6,500 g/mol or
- the polymolecularity index (PI) is less than 2.8 or ranges from 1.5 to 3, or from 1.5 to 2.8 or from 1.5 to 2.5.

3. Polymer according to one of claims 1 or 2 in which the anionic monomer comprising at least one polymerisable olefinic unsaturation comprises one or two one carboxylic acid groups, preferably comprises a single carboxylic acid group, preferably is chosen among acrylic acid, methacrylic acid, an acrylic acid salt, a methacrylic acid salt and mixtures thereof, more preferentially acrylic acid.

4. Polymer according to one of claims 1 to 3 in which compound (a) is a mineral compound or is hypophosphorous acid (H₃PO₂) or a derivative of hypophosphorous acid, preferably a compound comprising at least one hypophosphite ion (H²PO₂⁻), more preferentially a compound chosen among sodium hypophosphite (H₂PO₂Na), potassium hypophosphite (H₂PO₂K), calcium hypophosphite ([H₂PO₂]₂Ca) and mixtures thereof ; or for which:.
- compound (a) is used in an amount of at most 95% by weight or of at most 94% by weight or of at most 92.5% by weight, preferably in an amount ranging from 5 to 95% by weight, more preferentially from 50 to 95% by weight or from 50 to 80% by weight or from 50 to 70% by weight, relative to the total weight of compounds (a) and (b); or
- compound (a) is used in an amount ranging from 0.01 to 10% by weight relative to the amount of monomer, preferably from 0.01 to 5 or to 6% by weight or from 0.01 to 2 or to 3% by weight, relative to the amount of monomer.

5. Polymer according to one of claims 1 to 4 in which compound (b) is a mineral compound or is phosphorous acid (H₃PO₃) or a derivative of phosphorous acid, preferably a compound comprising at least one phosphite ion (HPO₃²⁻), more preferentially a compound chosen among phosphorous acid, sodium phosphite (HPO₃Na₂), potassium phosphite (HPO₃K₂), calcium phosphite (HPO₃Ca) and mixtures thereof ; or for which compound (b) is used in an amount of more than 6% by weight, more than 7.5% by weight, preferably more than 10% by weight, more than 12.5% by weight or more than 15% by weight, also preferentially more than 20% by weight, more than 25% by weight, more than 30% by weight or more than 40% by weight, relative to the total weight of compounds (a) and (b).

6. Polymer according to one of claims 1 to 5 in which compound (c) is chosen among hydrogen peroxide, ammonium persulphate, sodium persulphate, potassium persulphate, and mixtures thereof ; or for which compound (c) is used in an amount ranging:
- from 0.1 to 5% by weight of radical-generating compound relative to the amount by weight of monomer; preferably
- from 0.5 to 4.5% by weight of hydrogen peroxide relative to the amount by weight of monomer; or
- from 0.1 to 4% by weight of ammonium persulphate or alkaline metal persulphate, particularly sodium persulphate or potassium persulphate, relative to the amount by weight of monomer.

7. Polymer according to one of claims 1 to 6 in which the polymerisation reaction is carried out in the absence of a neutralisation agent, preferably in the absence of a base neutralisation agent ; or for which the polymerisation reaction also uses at least one monomer chosen among:
- another different anionic monomer chosen among acrylic acid, methacrylic acid, itaconic acid, maleic acid, their salts, and mixtures thereof,
- a non-ionic monomer comprising at least one polymerisable olefinic unsaturation, preferably at least one polymerisable ethylenic unsaturation and in particular a polymerisable vinyl group, more preferentially a non-ionic monomer chosen among styrene, vinylcaprolactam, the esters of an acid comprising at least one monocarboxylic acid group, particularly an ester of an acid chosen among acrylic acid, methacrylic acid and mixtures thereof, for example alkyl acrylate, in particular C₁-C₁₀-alkyl acrylate, preferentially C₁-C₄-alkyl acrylate, more preferentially methyl acrylate, ethyl acrylate, propyl acrylate, isobutyl acrylate, n-butyl acrylate, alkyl methacrylate, in particular C₁-C₁₀-alkyl methacrylate, preferentially C₁-C₄-alkyl methacrylate, more preferentially methyl methacrylate, ethyl methacrylate, propyl methacrylate, isobutyl methacrylate, n-butyl methacrylate, aryl acrylate, preferably phenyl acrylate, benzyl acrylate, phenoxyethyl acrylate, aryl methacrylate, preferably phenyl methacrylate, benzyl methacrylate, phenoxyethyl methacrylate, a compound of formula (I):
R¹-(L¹)ₘ-(L²)ₙ-R² (I)
wherein:
o R¹ represents a polymerisable acrylate group or a polymerisable methacrylate group,
o R² represents an OH group or an OCH₃ group,
o L¹ and L², identical or different, independently represent an ethylene-oxy group or a propylene-oxy group and
o m and n, identical or different and of which at least one is different from 0, represent a number less than or equal to 150 and their sum m+n is less than 150 and
- 2-acrylamido-2-methylpropanesulphonic acid, a salt of 2-acrylamido-2-methylpropanesulphonic acid, 2-(methacryloyloxy)ethanesulphonic acid, a salt of 2-(methacryloyloxy)ethanesulphonic acid, sodium methallyl sulphonate, sodium styrene sulphonate and mixtures thereof.

8. Polymer according to one of claims 1 to 7 in which the polymerisation reaction uses:
- 100% by weight of anionic monomer or
- from 70% to 99.5% by weight of anionic monomer and from 0.5% to 30% by weight of at least one monomer chosen among:
o another different anionic monomer chosen among acrylic acid, methacrylic acid, itaconic acid, maleic acid, their salts, and mixtures thereof,
o a non-ionic monomer comprising at least one polymerisable olefinic unsaturation, preferably at least one polymerisable ethylenic unsaturation and in particular a polymerisable vinyl group, more preferentially a non-ionic monomer chosen among styrene, vinylcaprolactam, the esters of an acid comprising at least one monocarboxylic acid group, particularly an ester of an acid chosen among acrylic acid, methacrylic acid and mixtures thereof, for example alkyl acrylate, in particular C₁-C₁₀-alkyl acrylate, preferentially C₁-C₄-alkyl acrylate, more preferentially methyl acrylate, ethyl acrylate, propyl acrylate, isobutyl acrylate, n-butyl acrylate, alkyl methacrylate, in particular C₁-C₁₀-alkyl methacrylate, preferentially C₁-C₄-alkyl methacrylate, more preferentially methyl methacrylate, ethyl methacrylate, propyl methacrylate, isobutyl methacrylate, n-butyl methacrylate, aryl acrylate, preferably phenyl acrylate, benzyl acrylate, phenoxyethyl acrylate, aryl methacrylate, preferably phenyl methacrylate, benzyl methacrylate, phenoxyethyl methacrylate, a compound of formula (I):
R¹-(L¹)ₘ-(L²)ₙ-R² (I)
wherein:
o R¹ represents a polymerisable acrylate group or a polymerisable methacrylate group,
o R² represents an OH group or an OCH₃ group,
o L¹ and L², identical or different, independently represent an ethylene-oxy group or a propylene-oxy group and
∘ m and n, identical or different and of which at least one is different from 0, represent a number less than or equal to 150 and their sum m+n is less than 150 and
- 2-acrylamido-2-methylpropanesulphonic acid, a salt of 2-acrylamido-2-methylpropanesulphonic acid, 2-(methacryloyloxy)ethanesulphonic acid, a salt of 2-(methacryloyloxy)ethanesulphonic acid, sodium methallyl sulphonate, sodium styrene sulphonate and mixtures thereof.

9. Method for preparing an aqueous suspension of particles of mineral material, preferably of an aqueous suspension with a solids content in mineral material of more than 60% by weight, preferably more than 70% by weight, more preferentially more than 75% by weight or more than 80% by weight of the suspension, comprising the mixture in water of particles of mineral material and of at least one polymer according to one of claims 1 to 8.

10. Method for preparing particles of mineral material comprising the grinding, in the presence of water, of at least one mineral material in the presence of at least one polymer according to one of claims 1 to 8.

11. Method according to claim 9 or according to claim 10 in which:
- the particles have a size of less than 50 µm or a size ranging from 0.05 µm to 50 µm or a size of less than 10 µm, preferably less than 5 µm or 2 µm, more preferentially less than 1 µm or less than 0.5 µm or
- the equivalent spherical diameter of the particles for a size ranging from 0.05 µm to 50 µm or less than 50 µm, preferably for a size of less than 10 µm, more preferentially less than 5 µm or 2 µm, even more preferentially less than 1 µm or less than 0.5 µm, is equal to 60% by weight or equal to 70% by weight or even equal to 80% by weight or even equal to 90% by weight.

12. Method according to one of claims 9 to 11, in which:
- a single mineral material or two or three mineral materials are used; or in which:
- the mineral material is synthetic or of natural origin, preferably chosen among alkaline-earth metal carbonate, preferably calcium carbonate (natural calcium carbonate or precipitated calcium carbonate), strontium carbonate, magnesium carbonate, barium carbonate, dolomite, kaolin, titanium dioxide, talcum, lime, calcium sulphate, barium sulphate, magnesium hydroxide.

13. Aqueous composition, in particular a paper coating colour, comprising particles of ground mineral material and at least one polymer defined according to one of claims 1 to 8, namely composition also comprising at least one admixture, in particular at least one admixture chosen among dispersing agents, anti-foaming agents, biocides, colouring, lubricants and optical brighteners or at least one binding agent, in particular a natural binding agent such as starch or a synthetic binding agent such as latex.

14. Use, preferably in water, as a grinding aid agent of at least one mineral material, preferably a mineral material defined according to one of claims 15 or 16, of at least one polymer defined according to one of claims 1 to 8.

15. Method of producing paper comprising the use of an aqueous composition according to one of claims 12 to 13.

16. Washing method comprising the application of at least one polymer according to one of claims 1 to 8, preferably in combination with at least one surfactant compound.

17. Detergent or descaling composition comprising at least one polymer according to one of claims 1 to 8, preferably in combination with at least one surfactant compound.
